# EUROPÄISCHE PATENTANMELDUNG

(11) **EP 3 613 319 A1**
(43) Veröffentlichungstag der Anmeldung: **26.02.2020**
(21) Anmeldenummer: 18190044.0
(22) Anmeldetag: 21.08.2018
(51) Int. Cl.: A47J 42/08, A47J 42/38, A47J 31/42

(54) **MAHLWERK ZUM MAHLEN VON MAHLGUT**

(71) Anmelder: JURA Elektroapparate AG, 4626 Niederbuchsiten (CH)
(72) Erfinder: BÜTTIKER, Philipp, 4625 Oberbuchsiten (CH); ULLMANN, Erich, 4622 Egerkingen (CH)
(74) Vertreter: EGLI-EUROPEAN PATENT ATTORNEYS

(57) **Zusammenfassung**

Das Mahlwerk (1) umfasst: einen Behälter (30) mit einer Ausgabeöffnung (30-1) für Mahlgut; ein erstes Mahlwerkzeug (11) und ein zweites Mahlwerkzeug (14), wobei das erste Mahlwerkzeug (11) relativ zum zweiten Mahlwerkzeug (14) um eine Drehachse (R) drehbar ist, sodass Mahlgut in einem Mahlspalt (20) zwischen dem ersten Mahlwerkzeug (11) und dem zweiten Mahlwerkzeug (14) zerkleinerbar ist, wobei das zweite Mahlwerkzeug (14) einen Eintrittskanal (14-1) aufweist, welcher von einem sich um die Drehachse (R) erstreckenden Wandabschnitt (16A) begrenzt ist und durch welchen Mahlgut in den Mahlspalt (20) zuführbar ist, wobei das zweite Mahlwerkzeug (14) axial zur Drehachse (R) relativ zum ersten Mahlwerkzeug (11) bewegbar ist; eine zwischen dem Behälter (30) und dem zweiten Mahlwerkzeug (14) angeordnete Dichtmanschette (40) mit einem Durchgangskanal (40A), über welchen Mahlgut aus dem Behälter (30) in den Eintrittskanal (14-1) des zweiten Mahlwerkzeugs (14) fallen kann. Die Dichtmanschette ist ortsfest bezüglich des Behälters (30) angeordnet und umfasst einen ersten ringförmigen Abschnitt (41), welcher den Durchgangskanal (40A) begrenzt, mit dem Behälter (30) in Kontakt ist und eine Überlappung (U) in Richtung der Drehachse (R) mit dem Wandabschnitt (16A) des zweiten Mahlwerkzeugs (14) aufweist.

## Beschreibung

### Technisches Gebiet

Die Erfindung bezieht sich auf ein Mahlwerk zum Mahlen von Mahlgut, insbesondere zum Mahlen von Kaffeebohnen.

### Stand der Technik

Ein Mahlwerk der genannten Art kann beispielsweise in Kombination mit einer automatischen Kaffeemaschine vorgesehen sein oder alternativ auch allein verwendbar sein.

Ein Mahlwerk zum Mahlen von Mahlgut (beispielsweise Kaffeebohnen) gemäss dem bekannten Stand der Technik umfasst gewöhnlich:
- einen Behälter zur Aufnahme von Mahlgut mit einer Ausgabeöffnung für das Mahlgut;
- ein erstes Mahlwerkzeug und ein zweites Mahlwerkzeug, wobei das erste Mahlwerkzeug relativ zu dem zweiten Mahlwerkzeug um eine Drehachse derart drehbar ist, dass Mahlgut in einem zwischen dem ersten Mahlwerkzeug und dem zweiten Mahlwerkzeug ausgebildeten Mahlspalt zu einem Pulver zerkleinerbar ist, wobei das zweite Mahlwerkzeug einen Eintrittskanal aufweist, durch welchen aus der Ausgabeöffnung des Behälters ausgegebenes Mahlgut in den Mahlspalt zuführbar ist, und wobei das zweite Mahlwerkzeug derart gelagert ist, dass es axial zur Drehachse bewegbar und in verschiedene Positionen relativ zum ersten Mahlwerkzeug und zum Behälter bringbar ist, und wobei das zweite Mahlwerkzeug einen sich ringförmig um die Drehachse erstreckenden Wandabschnitt umfasst, welcher den Eintrittskanal radial nach aussen begrenzt;
- eine Dichtmanschette mit einem sich entlang der Drehachse erstreckenden Durchgangskanal, welche Dichtmanschette zwischen dem Behälter und dem zweiten Mahlwerkzeug angeordnet ist, sodass Mahlgut aus dem Behälter durch die Ausgabeöffnung des Behälters über den Durchgangskanal der Dichtmanschette in den Eintrittskanal des zweiten Mahlwerkzeugs fallen kann.

Die räumlichen Abmessungen des Mahlspalts bestimmen hierbei die Korngrössen des beim Mahlen im Mahlspalt erzeugten Pulvers und somit den Mahlgrad des erzeugten Pulvers. Dadurch, dass das zweite Mahlwerkzeug axial zur Drehachse bewegbar und in verschiedene Positionen relativ zum ersten Mahlwerkzeug bringbar ist, wird erreicht, dass die räumlichen Abmessungen des Mahlspalts veränderbar sind. Durch Verändern der Position des zweiten Mahlwerkzeugs axial zur Drehachse relativ zum ersten Mahlwerkzeug kann der Mahlgrad des jeweils beim Mahlen erzeugten Pulvers verändert werden und somit beeinflusst werden, ob das beim Mahlen erzeugte Pulver mehr oder weniger grobe bzw. feine Partikel enthält.

Es gibt verschiedene Typen von Mahlwerken, welche sich hinsichtlich der Form und Anordnung der Mahlwerkzeuge unterscheiden, z.B. Kegelmahlwerke oder Scheibenmahlwerke.

Ein (insbesondere zum Mahlen von Kaffeebohnen vorgesehenes) Mahlwerk der vorstehend genannten Art ist beispielsweise in EP 2764807 A1 offenbart. Bei diesem (in EP 2764807 A1 offenbartem) Mahlwerk ist (wie üblich) der Behälter zur Aufnahme des Mahlguts an einer vorgegebenen (bezüglich der Drehachse fixen) Position oberhalb des Mahlspalts angeordnet. Die zwischen dem Behälter zur Aufnahme des Mahlguts und dem zweiten Mahlwerkzeug angeordnete Dichtmanschette (in EP 2764807 A1 "Kopplungselement 18" genannt) besteht aus einem elastischen Material (z.B. Kunststoff) und ist auf das zweite Mahlwerkzeug aufgesetzt, um den Behälter zur Aufnahme des Mahlguts an das zweite Mahlwerkzeug anzukoppeln und zu ermöglichen, dass Mahlgut aus dem Behälter durch den von der Dichtmanschette begrenzten Durchgangskanal in den Mahlspalt fallen kann. Dadurch, dass die Dichtmanschette auf das zweite Mahlwerkzeug aufgesetzt ist, verändert sich die räumliche Lage der Dichtmanschette mit Bezug auf den Behälter, wenn die Position des zweiten Mahlwerkzeug axial zur Drehachse bewegt wird, um den Mahlgrad des beim Mahlen erzeugten Pulvers zu verändern. Wenn die Position des zweiten Mahlwerkzeugs axial zur Drehachse verändert wird, wird auch der Abstand zwischen dem zweiten Mahlwerkzeug und dem Behälter axial zur Drehachse verändert. Hierbei besteht die Gefahr, dass zwischen der Dichtmanschette und dem Behälter ein Spalt entsteht, welcher derart breit sein kann, dass beim Mahlen erzeugte Splitter des Mahlguts durch diesen Spalt entweichen und sich im Mahlwerk weiträumig verteilen können, was eine unerwünschte Verschmutzung des Mahlwerks verursacht. Der Gefahr, dass ein Spalt zwischen der Dichtmanschette und dem Behälter entstehen kann, wenn die Position des zweiten Mahlwerkzeugs axial zur Drehachse verändert wird, kann in einem gewissen Rahmen dadurch begegnet werden, dass die Dichtmanschette im vorliegenden Fall aus einem elastischen Material besteht und somit elastisch deformierbar ist. Auf diese Weise wird zumindest erreicht, dass sich die Form der Dichtmanschette innerhalb bestimmter Toleranzen an den Behälter bzw. an die äussere Form des Behälters anpassen kann, wenn die Position des zweiten Mahlwerkzeugs axial zur Drehachse verändert wird. Die Form der Dichtmanschette kann sich hierbei innerhalb besonders grosser Toleranzen an den Behälter bzw. an die äussere Form des Behälters anpassen, wenn die Dichtmanschette aus einem weichen, flexiblen Material gefertigt ist. Wenn die Dichtmanschette aus einem weichen, flexiblen Material gefertigt ist, besteht allerdings die Gefahr, dass beim Mahlen erzeugte Splitter des Mahlguts beim Mahlen aus dem Mahlspalt nach oben geschleudert werden und beim Aufprall auf die Dichtmanschette einen auf die Dichtmanschette wirkenden Druck erzeugen, welcher derart gross ist, dass die Dichtmanschette deformiert wird. Hierbei kann ebenfalls ein Spalt zwischen der Dichtmanschette und dem Behälter entstehen, durch welchen Splitter des Mahlguts entweichen können. Eine Dichtmanschette der vorstehend genannten Art hat dementsprechend den Nachteil, dass sie den Zwischenraum zwischen dem Behälter und dem zweiten Mahlwerkzeug nur unzureichend gegen Splitter des Mahlguts abdichten kann, wenn der Mahlgrad des Pulvers über einen relativ grossen Bereich geändert werden soll.

### Zusammenfassung der Erfindung

Der vorliegenden Erfindung liegt die Aufgabe zugrunde, die genannten Nachteile zu vermeiden und ein Mahlwerk zum Mahlen von Mahlgut mit einer Dichtmanschette schaffen, welche eine zuverlässige Abdichtung gegen Splitter des Mahlguts selbst dann ermöglicht, wenn der Mahlgrad des beim Mahlen erzeugbaren Pulvers über einen relativ grossen Bereich veränderbar sein soll.

Diese Aufgabe wird gelöst durch ein Mahlwerk mit den Merkmalen des Patentanspruchs 1.

Das Mahlwerk zum Mahlen von Mahlgut, insbesondere zum Mahlen von Kaffeebohnen, umfasst: einen Behälter zur Aufnahme von Mahlgut mit einer Ausgabeöffnung für das Mahlgut; ein erstes Mahlwerkzeug und ein zweites Mahlwerkzeug, wobei das erste Mahlwerkzeug relativ zu dem zweiten Mahlwerkzeug um eine Drehachse derart drehbar ist, dass Mahlgut in einem zwischen dem ersten Mahlwerkzeug und dem zweiten Mahlwerkzeug ausgebildeten Mahlspalt zu einem Pulver zerkleinerbar ist, wobei das zweite Mahlwerkzeug einen Eintrittskanal aufweist, durch welchen aus der Ausgabeöffnung des Behälters ausgegebenes Mahlgut in den Mahlspalt zuführbar ist, und wobei das zweite Mahlwerkzeug derart gelagert ist, dass es axial zur Drehachse bewegbar und in verschiedene Positionen relativ zum ersten Mahlwerkzeug und zum Behälter bringbar ist; eine Dichtmanschette mit einem sich entlang der Drehachse erstreckenden Durchgangskanal, welche Dichtmanschette zwischen dem Behälter und dem zweiten Mahlwerkzeug angeordnet ist, sodass Mahlgut aus dem Behälter durch die Ausgabeöffnung des Behälters über den Durchgangskanal der Dichtmanschette in den Eintrittskanal des zweiten Mahlwerkzeugs fallen kann, wobei das zweite Mahlwerkzeug einen sich ringförmig um die Drehachse erstreckenden Wandabschnitt umfasst, welcher den Eintrittskanal radial nach aussen begrenzt.

Gemäss der Erfindung ist die Dichtmanschette ortsfest bezüglich des Behälters angeordnet und weist einen ersten ringförmigen Abschnitt auf, welcher den Durchgangskanal radial nach aussen begrenzt, wobei der erste ringförmige Abschnitt sich axial zur Drehachse derart erstreckt, dass ein erster Bereich des ersten ringförmigen Abschnitts mit dem Behälter in Kontakt ist und ein zweiter Bereich des ersten ringförmigen Abschnitts eine Überlappung in Richtung der Drehachse mit dem Wandabschnitt des zweiten Mahlwerkzeugs aufweist.

Dadurch, dass die Dichtmanschette ortsfest bezüglich des Behälters angeordnet ist, wird erreicht, dass sich die räumliche Lage der Dichtmanschette nicht verändert, wenn die Position des zweiten Mahlwerkzeugs axial zur Drehachse relativ zum Behälter verändert wird. Der erste Bereich des ersten ringförmigen Abschnitts kann somit immer in Kontakt mit dem Behälter sein, wenn die Position des zweiten Mahlwerkzeugs axial zur Drehachse relativ zum Behälter verändert wird. Der erste ringförmige Abschnitt kann insbesondere derart dicht am Behälter gehalten sein, dass zwischen dem ersten ringförmigen Abschnitt und dem Behälter kein Zwischenraum vorhanden ist, welchen beim Mahlen erzeugte Splitter des Mahlguts passieren könnten.

In diesem Zusammenhang bedeutet "Überlappung in Richtung der Drehachse" eine Anordnung des ersten ringförmigen Abschnitts der Dichtmanschette und des Wandabschnitts des zweiten Mahlwerkzeugs derart, dass zumindest ein sich axial zur Drehachse erstreckender Bereich des ersten ringförmigen Abschnitts der Dichtmanschette und ein sich axial zur Drehachse erstreckender Bereich des Wandabschnitts des zweiten Mahlwerkzeugs axial zur Drehachse relativ zueinander derart angeordnet sind, dass der sich axial zur Drehachse erstreckende Bereich des ersten ringförmigen Abschnitts und der sich axial zur Drehachse erstreckende Bereich des Wandabschnitts des zweiten Mahlwerkzeugs entlang einer parallel zur Drehachse gerichteten Strecke ("Überlappungsbereich") nebeneinander angeordnet sind. Hierbei können der Wandabschnitt des zweiten Mahlwerkzeugs und der erste ringförmige Abschnitt der Dichtmanschette derart dicht relativ zueinander angeordnet sein, dass zwischen dem Wandabschnitt des zweiten Mahlwerkzeugs und dem ersten ringförmigen Abschnitt der Dichtmanschette kein Zwischenraum vorhanden ist, welchen beim Mahlen erzeugte Splitter des Mahlguts passieren könnten.

Dadurch, dass der zweite Bereich (beispielsweise ein dem Behälter abgewandter Bereich) des ersten ringförmigen Abschnitts der Dichtmanschette eine Überlappung in Richtung der Drehachse mit dem Wandabschnitt des zweiten Mahlwerkzeugs aufweist, wird deshalb erreicht, dass das zweite Mahlwerkzeug axial zur Drehachse relativ zum Behälter und relativ zum ersten ringförmigen Abschnitt der Dichtmanschette zumindest um eine "vorgegebene Distanz", welche im Wesentlichen der Erstreckung des Überlappungsbereiches in Richtung der Drehachse entspricht, bewegbar sein kann und dabei zudem gewährleistet werden kann, dass zwischen dem Wandabschnitt des zweiten Mahlwerkzeugs und dem ersten ringförmigen Abschnitt der Dichtmanschette kein Zwischenraum vorhanden ist, welchen beim Mahlen erzeugte Splitter des Mahlguts passieren könnten.

Eine Ausführungsform des Mahlwerks weist eine bezüglich des Behälters ortsfeste Auflagefläche auf, auf welche die Dichtmanschette gestützt ist, um die Dichtmanschette ortsfest bezüglich des Behälters zu halten. Diese Ausführungsform ermöglicht auf einfache Weise, die Dichtmanschette ortsfest bezüglich des Behälters anzuordnen.

Eine Ausführungsform des Mahlwerks ist derart ausgebildet, dass die Dichtmanschette einen zweiten ringförmigen Abschnitt aufweist, welcher sich ringförmig um die Drehachse erstreckt und mit dem ersten ringförmigen Abschnitt verbunden ist. Eine Weiterbildung dieser Ausführungsform weist eine bezüglich des Behälters ortsfeste Auflagefläche auf, auf welche der zweite ringförmige Abschnitt der Dichtmanschette gestützt ist, um die Dichtmanschette ortsfest bezüglich des Behälters zu halten. Der zweite ringförmige Abschnitt der Dichtmanschette bietet eine einfache Möglichkeit, die Dichtmanschette unabhängig von der Grösse und der Form des ersten ringförmigen Abschnitts der Dichtmanschette anzuordnen. Die Form und Grösse des zweiten ringförmigen Abschnitts der Dichtmanschette kann - jeweils angepasst an die Form und die räumliche Lage der Auflagefläche - geeignet gewählt werden.

Eine Ausführungsform des Mahlwerks ist derart ausgebildet, dass der erste ringförmige Abschnitt und der zweite ringförmige Abschnitt sich derart ringförmig um die Drehachse erstrecken, dass der erste ringförmige Abschnitt und der zweite ringförmige Abschnitt jeweils einen Abstand zur Drehachse aufweisen. Der zweite ringförmige Abschnitt kann sich beispielsweise in einem grösseren Abstand zur Drehachse erstrecken als der erste ringförmige Abschnitt. Der zweite ringförmige Abschnitt der Dichtmanschette kann deshalb auf eine ortsfeste Auflagefläche gestützt werden, welche (im Vergleich zum ersten ringförmigen Abschnitt der Dichtmanschette) in einem relativ grossen Abstand zur Drehachse angeordnet sein kann.

Eine Ausführungsform des Mahlwerks ist derart ausgebildet, dass sich der zweite ringförmige Abschnitt der Dichtmanschette auf der von der Drehachse abgewandten Seite des ersten ringförmigen Abschnitts der Dichtmanschette entlang der Peripherie des ersten ringförmigen Abschnitts erstreckt. Diese Anordnung des zweiten ringförmigen Abschnitts ermöglicht die Konstruktion einer Dichtmanschette, welche eine geringe Erstreckung axial zur Drehachse aufweist.

Eine Ausführungsform des Mahlwerks ist derart ausgebildet, dass die Dichtmanschette mindestens einen Verbindungsabschnitt umfasst, welcher sich zwischen dem ersten ringförmigen Abschnitt und dem zweiten ringförmigen Abschnitt erstreckt und sowohl mit dem ersten ringförmigen Abschnitt als auch mit dem zweiten ringförmigen Abschnitt verbunden ist. Die Dichtmanschette kann hinsichtlich des Verbindungsabschnitts in einer Reihe von Varianten gestaltet sein (abhängig vom jeweiligen Verwendungszweck). Die Dichtmanschette kann beispielsweise eine Mehrzahl des Verbindungsabschnitts aufweisen. Der mindestens eine Verbindungsabschnitt oder jeder Verbindungsabschnitt kann sich beispielsweise radial zur Drehachse erstrecken.

Der mindestens eine Verbindungsabschnitt oder jeder Verbindungsabschnitt kann als Federelement ausgebildet sein. In diesem Fall ist der jeweilige Verbindungsabschnitt im Sinne eines Federelements elastisch deformierbar, sodass der erste ringförmige Abschnitt über einen oder mehrere derartige Verbindungsabschnitte elastisch an den zweiten ringförmigen Abschnitt der Dichtmanschette gekoppelt ist. Die jeweiligen Verbindungsabschnitte der Dichtmanschette sind dabei ausgebildet, den ersten ringförmigen Abschnitt in einer Ruhelage relativ zum zweiten ringförmigen Abschnitt zu halten. Weiterhin werden die jeweiligen Verbindungsabschnitte der Dichtmanschette bei einer Auslenkung des ersten ringförmigen Abschnitts aus der Ruhelage deformiert und erzeugen dabei eine auf den ersten ringförmigen Abschnitt wirkende (Rückstell-) Kraft, welche entgegen der Auslenkung des ersten ringförmigen Abschnitts aus der Ruhelage gerichtet ist.

Der mindestens eine Verbindungsabschnitt kann bzw. die jeweiligen Verbindungsabschnitte können insbesondere derart elastisch deformierbar sein, dass der erste ringförmige Abschnitt relativ zum zweiten ringförmigen Abschnitt in Richtung der Drehachse bewegbar ist. Der erste ringförmige Abschnitt der Dichtmanschette kann beispielsweise aus einer Ruhelage relativ zum zweiten ringförmigen Abschnitt in Richtung der Drehachse auslenkbar sein.

Dadurch, dass der mindestens eine Verbindungsabschnitt elastisch deformierbar ist bzw. die jeweiligen Verbindungsabschnitte elastisch deformierbar sind, ist es möglich, Toleranzen hinsichtlich der Anordnung des Behälters relativ zu der ortsfesten Auflagefläche, auf welche der zweite ringförmige Abschnitt der Dichtmanschette gestützt ist, durch eine entsprechende Deformation des mindestens einen Verbindungsabschnitts bzw. durch entsprechende Deformationen der jeweiligen Verbindungsabschnitte zu kompensieren.

Eine Weiterentwicklung der vorstehend genannten Ausführungsform des Mahlwerks ist dadurch charakterisiert, dass am Behälter eine sich ringförmig um die Ausgabeöffnung erstreckende Kontaktfläche für den ersten ringförmigen Abschnitt der Dichtmanschette ausgebildet ist und am ersten ringförmigen Abschnitt der Dichtmanschette eine sich ringförmig um den Durchgangskanal erstreckende Kontaktfläche für den Behälter ausgebildet ist. Weiterhin ist der erste ringförmige Abschnitt relativ zum zweiten ringförmigen Abschnitt derart angeordnet, dass der mindestens eine Verbindungsabschnitt elastisch vorgespannt ist und eine Anpresskraft erzeugt, welche ausgebildet ist, die am ersten ringförmigen Abschnitt ausgebildete Kontaktfläche für den Behälter an die am Behälter ausgebildete Kontaktfläche für den ersten ringförmigen Abschnitt zu pressen. Die Grösse der Anpresskraft kann hierbei jeweils so gewählt werden, dass der erste ringförmige Abschnitt der Dichtmanschette aufgrund der Anpresskraft in einer stabilen Lage an der am Behälter ausgebildeten, sich ringförmig um die Ausgabeöffnung erstreckende Kontaktfläche gehalten ist.

Die am Behälter ausgebildete Kontaktfläche für den ersten ringförmigen Abschnitt der Dichtmanschette kann beispielsweise eine ebene Fläche sein. Entsprechend kann die am ersten ringförmigen Abschnitt ausgebildete Kontaktfläche für den Behälter eine ebene Fläche sein. Dies erlaubt eine herstellungstechnisch einfache Realisierung der jeweiligen Kontaktflächen. Weiterhin ist auf einfache Wiese gewährleistet, dass die am ersten ringförmigen Abschnitt der Dichtmanschette ausgebildete, sich ringförmig um den Durchgangskanal erstreckende Kontaktfläche für den Behälter entlang ihres gesamten Umfangs in Kontakt mit der am Behälter ausgebildeten, sich ringförmig um die Ausgabeöffnung erstreckende Kontaktfläche für den ersten ringförmigen Abschnitt der Dichtmanschette sein kann. Auf diese Weise wird zuverlässig sichergestellt, dass zwischen dem Behälter und dem ersten ringförmigen Abschnitt der Dichtmanschette kein Zwischenraum entstehen kann, welchen beim Mahlen erzeugte Splitter des Mahlguts passieren könnten.

In dem "Überlappungsbereich", in welchem der erste ringförmige Abschnitt der Dichtmanschette eine Überlappung in Richtung der Drehachse mit dem Wandabschnitt des zweiten Mahlwerkzeugs aufweist, kann zwischen dem ersten ringförmigen Abschnitt der Dichtmanschette und dem Wandabschnitt des zweiten Mahlwerkzeugs ein Spalt ausgebildet sein. Die räumlichen Abmessungen eines derartigen Spalts können (entsprechend dem Mahlgrad des beim Mahlen zu erzeugenden Pulvers) so bemessen sein, dass beim Mahlen erzeugte Splitter des Mahlguts den Spalt nicht passieren können. Alternativ können der Wandabschnitt des zweiten Mahlwerkzeugs und der erste ringförmige Abschnitt der Dichtmanschette derart geformt bzw. ausgebildet sein, dass der Wandabschnitt des zweiten Mahlwerkzeugs bei einer Bewegung des zweiten Mahlwerkzeugs in Richtung der Drehachse gleitend an dem ersten ringförmigen Abschnitt anliegt. Auf diese Weise ist gewährleistet, dass zwischen dem ersten ringförmigen Abschnitt der Dichtmanschette und dem Wandabschnitt des zweiten Mahlwerkzeugs kein Zwischenraum vorhanden ist, welchen beim Mahlen erzeugte Splitter des Mahlguts passieren könnten.

Bei den vorstehend genannten Ausführungsformen des Mahlwerks weist die Überlappung eine Erstreckung in Richtung der Drehachse auf, welche bei einer Bewegung des zweiten Mahlwerkzeugs in Richtung der Drehachse veränderbar ist.

### Kurze Beschreibung der Zeichnungen

Weitere Einzelheiten der Erfindung und insbesondere beispielhafte Ausführungsformen des erfindungsgemässen Mahlwerks werden im Folgenden anhand der beigefügten Zeichnungen erläutert. Es zeigen:
- Fig. 1: eine Explosionsdarstellung eines Mahlwerks gemäss der Erfindung in einer perspektivischen Ansicht, mit einem ersten Mahlwerkzeug, einem zweiten Mahlwerkzeug und einer Dichtmanschette, jedoch ohne Darstellung eines Behälters zur Aufnahme von Mahlgut;
- Fig. 2: eine Explosionsdarstellung des Mahlwerks gemäss Fig. 1, dargestellt in einem Schnitt entlang der Ebene E1 gemäss Fig. 1 in einer Ansicht in Richtung der mit den Bezugszeichen II versehenen Pfeile gemäss Fig. 1;
- Fig. 3: das Mahlwerk gemäss Fig. 1 mit einem Behälter zur Aufnahme von Mahlgut und einer ortsfest bezüglich des Behälters angeordneten Dichtmanschette, dargestellt in einem Schnitt entlang der Ebene E1 gemäss Fig. 1 in einer Ansicht in Richtung der mit den Bezugszeichen III versehenen Pfeile gemäss Fig. 1;
- Fig. 4: das Mahlwerk gemäss Fig. 1 mit einem Behälter zur Aufnahme von Mahlgut und einer ortsfest angeordneten Dichtmanschette, dargestellt in einem Schnitt wie in Fig. 3, wobei der Behälter - zur Veranschaulichung von konstruktiven Einzelheiten des Behälters - in einer Situation dargestellt ist, in welcher der Behälter von der Dichtmanschette separiert und oberhalb der Dichtmanschette in einem Abstand zur Dichtmanschette dargestellt ist;
- Fig. 5A: die Dichtmanschette gemäss Fig. 1, in einer perspektivischen Ansicht;
- Fig. 5B: die Dichtmanschette gemäss Fig. 5A, dargestellt in einem Schnitt entlang der Ebene E2 gemäss Fig. 5A in einer Ansicht in Richtung der mit den Bezugszeichen VB versehenen Pfeile gemäss Fig. 5A;
- Fig. 6A: das Mahlwerk gemäss Fig. 1 mit einem Behälter zur Aufnahme von Mahlgut und einer ortsfest bezüglich des Behälters angeordneten Dichtmanschette, in einem Schnitt entlang der Drehachse des ersten Mahlwerkzeugs, wobei das zweite Mahlwerkzeug in eine erste (untere) Position gebracht ist;
- Fig. 6b: das Mahlwerk gemäss Fig. 6A, wobei das zweite Mahlwerkzeug in eine zweite (obere) Position gebracht ist.

### Beschreibung von Ausführungsformen

Für dieselben Elemente in den Figuren sind jeweils dieselben Bezugszeichen verwendet, wenn nichts anderes erwähnt ist.

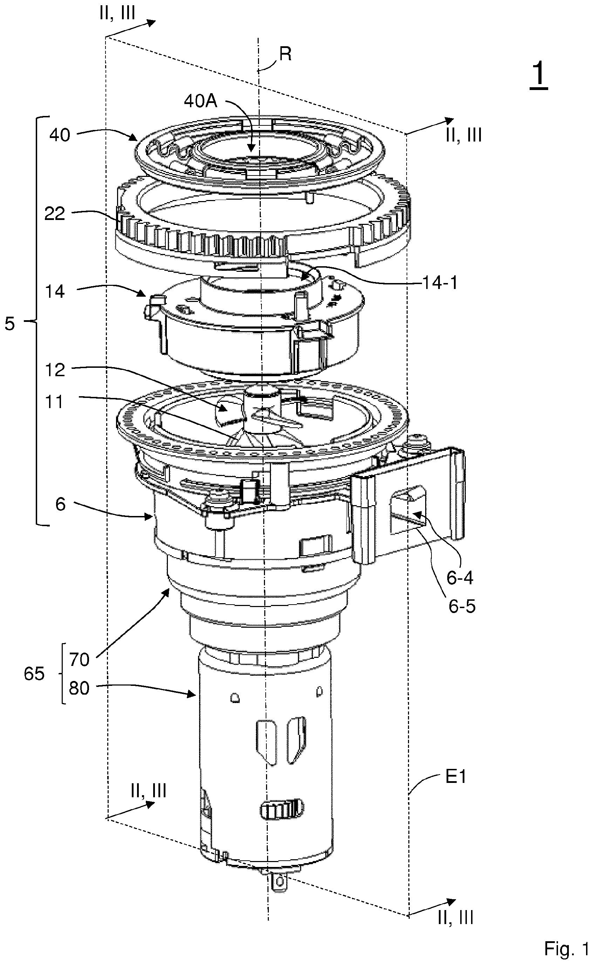

In Fig. 1-4 ist ein Mahlwerk 1 zum Mahlen von Kaffeebohnen gezeigt, welches aus einer Mahlvorrichtung 5, einem Behälter 30 zur Aufnahme von Mahlgut (Kaffeebohnen) und einer ein Getriebe 70 und einen Antriebsmotor 80 umfassenden Antriebseinrichtung 65 besteht.

Die Mahlvorrichtung 5 umfasst ein erstes Mahlwerkzeug 11, ein zweites Mahlwerkzeug 14 und ein Mitnehmerrad 25, wobei diese Teile von einem Gehäuse 6 umgeben sind, welches einen Austrittskanal 6-4 mit einer Austrittsöffnung 6-5 zur Ausgabe von Kaffeepulver aufweist. Das erste Mahlwerkzeug 11 ist relativ zum zweiten Mahlwerkzeug 14 um eine Drehachse R drehbar, sodass Kaffeebohnen in einem zwischen dem ersten Mahlwerkzeug 11 und dem zweiten Mahlwerkzeug 14 ausgebildeten Mahlspalt 20 zu einem Kaffeepulver zerkleinerbar sind.

Das Mahlwerk 1 ist im vorliegenden Beispiel als "Kegelmahlwerk" ausgebildet. Entsprechend ist das erste Mahlwerkzeug 11 der Mahlvorrichtung 5 als Mahlkegel mit einer Mantelfläche ausgebildet, welche derart strukturiert ist, dass sie eine Mehrzahl sich schraubenförmig um die Drehachse R erstreckende, zum Zerkleinern von Kaffeebohnen geeignete Kanten aufweist. Entsprechend umfasst das zweite Mahlwerkzeug 14 der Mahlvorrichtung 5 ein Mahlelement 15, welches als Mahlring ausgebildet ist und sich dementsprechend ringförmig um die Drehachse R erstreckt und eine der Drehachse R zugewandte Oberfläche aufweist. Diese der Drehachse R zugewandte Oberfläche des Mahlelements 15 ist derart strukturiert, dass sie ebenfalls eine Mehrzahl Kanten aufweist, welche zum Zerkleinern von Kaffeebohnen geeignet sind.

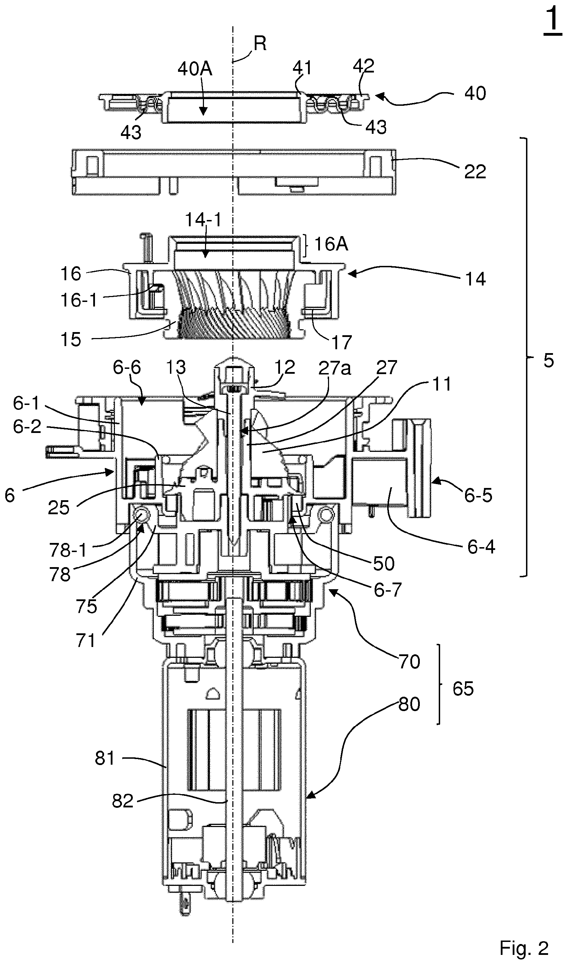

In den Explosionsdarstellungen des Mahlwerks 1 gemäss Fig. 1 und 2 sind in der Reihenfolge vom ersten Mahlwerkzeug 11 nach oben dargestellt: ein drehbares Förderelement 12 (im vorliegenden Beispiel ausgebildet als Schnecke), eine Befestigungsschraube 13, das zweite Mahlwerkzeug 14, ein Einstellring 22 zum Positionieren des zweiten Mahlwerkzeugs 14 und eine Dichtmanschette 40.

Das Mitnehmerrad 25 ist gemeinsam mit dem ersten Mahlwerkzeug 11 um die Drehachse R drehbar und umfasst einen sich radial zur Drehachse R erstreckenden scheibenförmigen Bereich, welcher auf einer oberen (dem ersten Mahlwerkzeug 11 und dem zweiten Mahlwerkzeug 14 zugewandten) Seite einen sich ringförmig um die Drehachse R erstreckenden Randbereich aufweist, auf welchem das während des Betriebs des Mahlwerks 1 produzierte Kaffeepulver bei einer Rotation des Mitnehmerrads 25 um die Drehachse R zum Austrittskanal 6-4 beförderbar ist, um eine Ausgabe des produzierten Kaffeepulvers aus der Mahlvorrichtung 5 durch die Austrittsöffnung 6-5 zu ermöglichen. Das Mitnehmerrad 25 weist ausserdem in der Mitte des scheibenförmigen Bereichs eine längliche Hülse 27 auf, welche sich entlang der Drehachse R nach oben erstreckt und eine sich entlang der Drehachse R erstreckende Bohrung 27a aufweist. Wie im Folgenden noch erläutert wird, dient die Hülse 27 im Wesentlichen dazu, eine mechanische Verbindung zwischen dem Mitnehmerrad 25, dem ersten Mahlwerkzeug 11, dem Förderelement 12 und der Antriebseinrichtung 65 herzustellen. Um eine effiziente Beförderung von Kaffeepulver mithilfe des Mitnehmerrads 25 zu ermöglichen, sind auf dem Randbereich des Mitnehmerrads eine Mehrzahl Mitnehmer-Flügel 26 angeordnet, welche sich - mit Bezug auf die Drehachse R - axial nach oben und radial nach aussen erstrecken. Jeder dieser Mitnehmer-Flügel 26 ist aufgrund seiner Anordnung bezüglich der Drehachse R geeignet, auf dem Randbereich befindliches Kaffeepulver bei einer Drehung des Mitnehmerrads 25 um die Drehachse R in eine der Drehrichtung des Mitnehmerrads 25 entsprechende Richtung mitzunehmen und somit durch einen sich um die Drehachse R erstreckenden Raumbereich in Drehrichtung des Mitnehmerrads 25 zu befördern.

Wie aus Figur 2, 3 und 4 ersichtlich, weist das Gehäuse 6 der Mahlvorrichtung 5 eine obere Öffnung 6-6 und eine untere Öffnung 6-7 auf, durch welche Öffnungen ein vom Gehäuse 6 begrenzter Innenraum von oben bzw. von unten zugänglich ist. Die obere Öffnung 6-6 dient dazu, bei einer Montage der Mahlvorrichtung 5 verschiedene Bauteile der Mahlvorrichtung 5 von oben in dem vom Gehäuse 6 begrenzten Innenraum zu montieren oder im Betrieb der Mahlvorrichtung 5 die zu mahlenden Kaffeebohnen von oben in den Innenraum zu bringen. Die untere Öffnung 6-7 ermöglicht es, eine Verbindung zwischen der unterhalb des Gehäuses 6 platzierten Antriebseinrichtung 65 und denjenigen im Innenraum platzierten Bauteilen der Mahlvorrichtung 5 herzustellen, welche mithilfe der Antriebseinrichtung 65 angetrieben werden sollen.

Wie aus Fig. 2-4 ersichtlich, umfasst das Gehäuse 6 verschiedene Wände bzw. Wandbereiche (z.B. Wände bzw. Wandbereiche 6-1, 6-2), welche dazu dienen, den vom Gehäuse 6 begrenzten Innenraum räumlich zu gliedern, um Kammern zu schaffen, welche Platz für verschiedene Bauteile der Mahlvorrichtung 5 bieten. Das Gehäuse 6 umfasst insbesondere eine erste (äussere) Wand 6-1, welche die obere Öffnung 6-6 begrenzt und ausserdem eine äussere Grenze des Innenraums bildet. Die erste Wand 6-1 erstreckt sich im Wesentlichen ringförmig um die Drehachse R und umschliesst einen an die obere Öffnung 6-6 angrenzenden Raumbereich, welcher Platz zum Anordnen des Förderelements 12, des ersten Mahlwerkzeugs 11 und des zweiten Mahlwerkzeugs 14 bietet.

Das zweite Mahlwerkzeugs 14 ist im vorliegenden Beispiel mehrteilig ausgebildet und umfasst insbesondere das Mahlelement 15 (Mahlring) und einen Träger 16 für das Mahlelement 15. Das Mahlelement 15 ist mithilfe des Trägers 16 ortsfest bezüglich des Gehäuses 6 gehalten. Zu diesem Zweck weist der Träger 16 Schnappelemente 16-1 zum Halten des Mahlelements 15 auf. Ein Befestigungsring 17 ist am Träger 16 fixiert, um die Schnappelemente 16-1 zu verriegeln, so dass das Mahlelement 15 fest am Träger 16 gehalten ist. Der Einstellring 22 ist drehbar um die Drehachse R am Gehäuse 6 gelagert und derart an den Träger 16 mechanisch gekoppelt, dass durch Drehen des Einstellrings 22 um die Drehachse R der Träger 16 mit dem Mahlelement 15 in Richtung der Drehachse R nach oben oder nach unten verschiebbar ist. Auf diese Weise ist die Anordnung des zweiten Mahlwerkzeugs 14 relativ zum ersten Mahlwerkzeug 11 veränderbar, sodass der Mahlgrad des zu produzierenden Kaffeepulvers einstellbar ist. Der Einstellring 22 ist hierbei derart am Gehäuse 6 gelagert, dass beim Drehen des Einstellrings 22 um die Drehachse R die räumliche Lage des Einstellrings 22 axial zur Drehachse R nicht verändert wird.

Das erste Mahlwerkzeug 11 ist bezüglich des zweiten Mahlwerkzeugs 14 derart zentriert angeordnet, dass sich das zweite Mahlwerkzeug 14 ringförmig um das erste Mahlwerkzeug 11 in einem Abstand zum ersten Mahlwerkzeug 11 erstreckt und somit zwischen dem ersten Mahlwerkzeug 11 und dem zweiten Mahlwerkzeug 14 ein Mahlspalt 20 ausgebildet ist, in welchem Kaffeebohnen zwischen dem ersten Mahlwerkzeug 11 und dem zweiten Mahlwerkzeug 14 zu einem Kaffeepulver zerkleinerbar sind, falls das erste Mahlwerkzeug 11 relativ zum zweiten Mahlwerkzeug 14 um die Drehachse R gedreht wird.

Um Kaffeebohnen in den Mahlspalt 20 einführen zu können, weist das zweite Mahlwerkzeug 14 einen Eintrittskanal 14-1 auf, welcher sich entlang der Drehachse R erstreckt und radial nach aussen durch einen sich ringförmig um die Drehachse R erstreckenden Wandabschnitt 16A begrenzt ist. Im vorliegenden Beispiel ist der Wandabschnitt 16A als ein Abschnitt des Trägers 16 ausgebildet, welcher sich oberhalb des Mahlelements 15 axial zur Drehachse R nach oben erstreckt. Weiterhin erstrecken sich der Wandabschnitt 16A und das Mahlelement 15 derart um die Drehachse 6, dass der Wandabschnitt 16A und das Mahlelement 15 radial zur Drehachse R in etwa dieselbe Distanz zur Drehachse R aufweisen. Auf diese Weise ist gewährleistet, dass Kaffeebohnen, welche von oben in den Eintrittskanal 14-1 fallen, zum Mahlspalt 20 gelangen. Der Mahlspalt 20 ist derart geformt, dass er an einem oberen Ende einen sich ringförmig um die Drehachse R erstreckenden Bereich aufweist, welcher als Eintrittspalt für Kaffeebohnen dient, wobei eine Breite des Eintrittspalt derart gewählt ist, dass ganze Kaffeebohnen den Eintrittspalt passieren können. Weiterhin ist der Mahlspalt 20 derart geformt, dass er an einem vom Eintrittspalt entfernten Ende einen sich ringförmig um die Drehachse R erstreckenden Bereich aufweist, welcher als Austrittspalt für Kaffeepulver dient, sodass das beim Mahlen im Mahlspalt 20 produzierte Kaffeepulver den Mahlspalt 20 durch den Austrittspalt verlassen muss, wobei eine Breite des Austrittspalts die Korngrösse des produzierten Kaffeepulvers limitiert und somit den Mahlgrad des produzierten Kaffeepulvers definiert.

Das drehbare Förderelement 12 dient dazu, durch den Eintrittskanal 14-1 zugeführte Kaffeebohnen entlang der Drehachse R in den Mahlspalt 20 zwischen dem ersten Mahlwerkzeug 11 und dem zweiten Mahlwerkzeug 14 zu befördern.

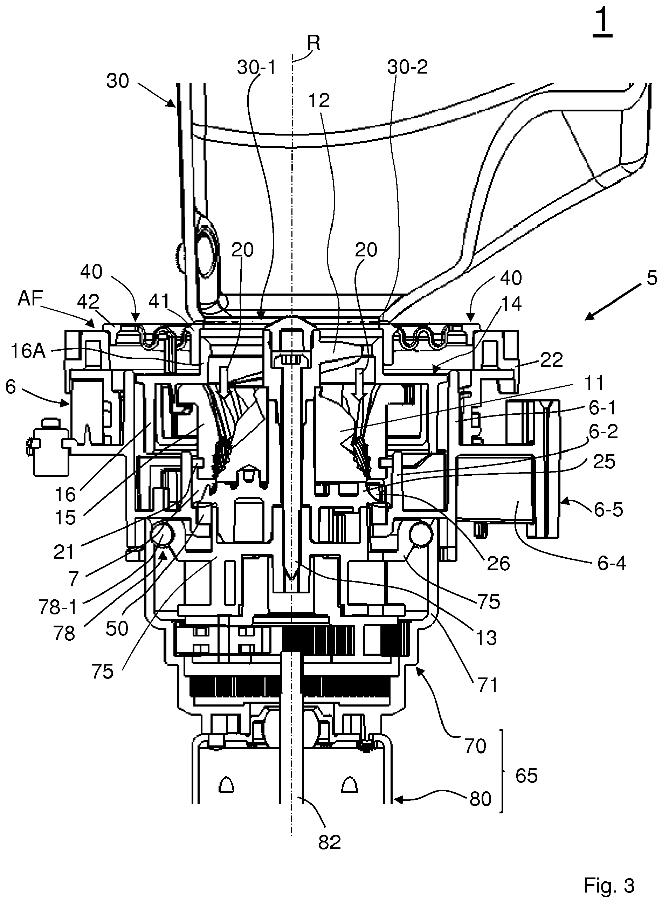

Wie aus Fig. 3-4 weiterhin ersichtlich, ist der Mahlspalt 20 mit einem Raumbereich 7 des vom Gehäuse 6 umgebenen Innenraums verbunden, welcher für produziertes Kaffeepulver vorgesehen ist und durch welchen das Kaffeepulver befördert werden muss, um zum Austrittskanal 6-4 bzw. zur Austrittsöffnung 6-5 zu gelangen. Der für das Kaffeepulver vorgesehene Raumbereich 7 ist nach oben durch das erste Mahlwerkzeug 11 und das zweite Mahlwerkzeug 14 begrenzt und wird radial nach aussen durch eine zweite Wand 6-2 limitiert, welche sich in dem vom Gehäuse 6 umgebenen Innenraum in einem Abstand zur unteren Öffnung 6-7 des Gehäuses 6 ringförmig um die Drehachse R erstreckt. Der Raumbereich 7 ist ferner nach unten durch das Mitnehmerrad 25 begrenzt.

Um zu verhindern, dass gemahlenes Kaffeepulver aus dem Raumbereich 7 nach oben entweichen kann, ist ein Dichtring 21 zwischen dem Mahlelement 15 und der zweiten Wand 6-2 des Gehäuses 6 eingeklemmt. Um ausserdem zu verhindern, dass gemahlenes Kaffeepulver aus dem Raumbereich 7 nach unten entweichen kann, ist unterhalb des Mitnehmerrads 25 ein Dichtring 50 angeordnet, welcher die Unterseite des Mitnehmerrads 25 gegen das Gehäuse 6 abdichtet.

Wie aus Fig. 1-3 ersichtlich, ist die Antriebseinrichtung 65 an einer Unterseite des Gehäuses 6 angeordnet, wobei das Getriebe 70 der Antriebseinrichtung 65 unmittelbar an der unteren Öffnung 6-7 des Gehäuses 6 platziert ist.

Das Getriebe 70 umfasst ein Getriebe-Gehäuse 71, einen Abtrieb 75, welcher zum Antreiben des Mitnehmerrads 25, des ersten Mahlwerkzeugs 11 und des Förderelements 12 dient, und ein Wälzlager 78 mit Kugeln 78-1, welches den Abtrieb 75 am Getriebe-Gehäuse 71 führt. Um den Abtrieb 75 antreiben zu können, ist unterhalb des Getriebes 70 der Antriebsmotor 80 angeordnet. Der Antriebsmotor 80 umfasst ein separates Gehäuse 81, welches ortsfest am Getriebe-Gehäuse 71 gehalten ist, wobei eine Antriebswelle 82 des Antriebsmotors 80 an den Abtrieb 75 des Getriebes 70 gekoppelt ist, sodass der Abtrieb 75 synchron mit der Antriebswelle 82 des Antriebsmotors 80 drehbar ist.

Um das Mitnehmerrad 25, das erste Mahlwerkzeug 11 und das Förderelement 12 antreiben zu können, sind das Mitnehmerrad 25, das erste Mahlwerkzeug 11 und das Förderelement 12 starr mit dem Abtrieb 75 des Getriebes 70 verbunden. Der Abtrieb 75, das Mitnehmerrad 25, das erste Mahlwerkzeug 11 und das Förderelement 12 sind dabei - in dieser Reihenfolge - entlang der Drehachse R hintereinander angeordnet. Der Abtrieb 75, das Mitnehmerrad 25, das erste Mahlwerkzeug 11 und das Förderelement 12 sind dabei derart komplementär geformt, dass der Abtrieb 75, das erste Mahlwerkzeug 11 und das Förderelement 12 formschlüssig mit dem Mitnehmerrad 25 verbindbar sind. Das erste Mahlwerkzeug 11 weist zu diesem Zweck eine zentrale Bohrung auf, welche sich entlang der Drehachse R erstreckt und derart geformt ist, dass die Hülse 27 des Mitnehmerrads 25 von der Unterseite des ersten Mahlwerkzeugs 11 formschlüssig in die zentrale Bohrung des ersten Mahlwerkzeugs 11 einsetzbar ist, und zwar derart, dass das Förderelement 12 am oberen Ende der Hülse 27 formschlüssig in die Bohrung 27a einsetzbar ist, welche in der Hülse 27 entlang der Drehachse R ausgebildet ist. Der Abtrieb 75 ist wiederum derart geformt, dass zumindest ein Abschnitt des Abtriebs 75 von der Unterseite des Mitnehmerrads 25 her formschlüssig in die Bohrung 27a im Mitnehmerrad 25 einsetzbar ist.

Wie Fig. 2-4 weiterhin andeuten, sind der Abtrieb 75, das Mitnehmerrad 25, das erste Mahlwerkzeug 11 und das Förderelement 12 mittels der Schraube 13 zu einer starren Baugruppe verbunden, welche als Ganzes relativ zum Gehäuse 6 um die Drehachse R drehbar ist. Zu diesem Zweck ist die Schraube 13 durch durchgehende Bohrungen, welche sich durch das Förderelement 12, das erste Mahlwerkzeug 11 und das Mitnehmerrad 25 entlang der Drehachse R erstecken, bis zum Abtrieb 75 durchsteckbar, sodass die Schraube 13 an einem am Abtrieb 75 ausbildeten Gewinde angeschraubt werden kann, um das Förderelement 12, das erste Mahlelement 11 und das Mitnehmerrad 25 am Abtrieb 75 festzuklemmen.

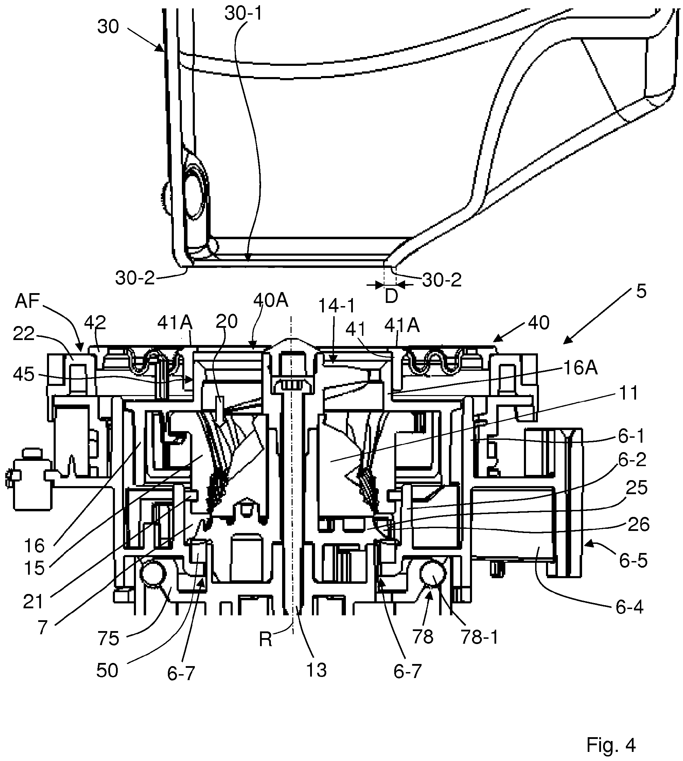

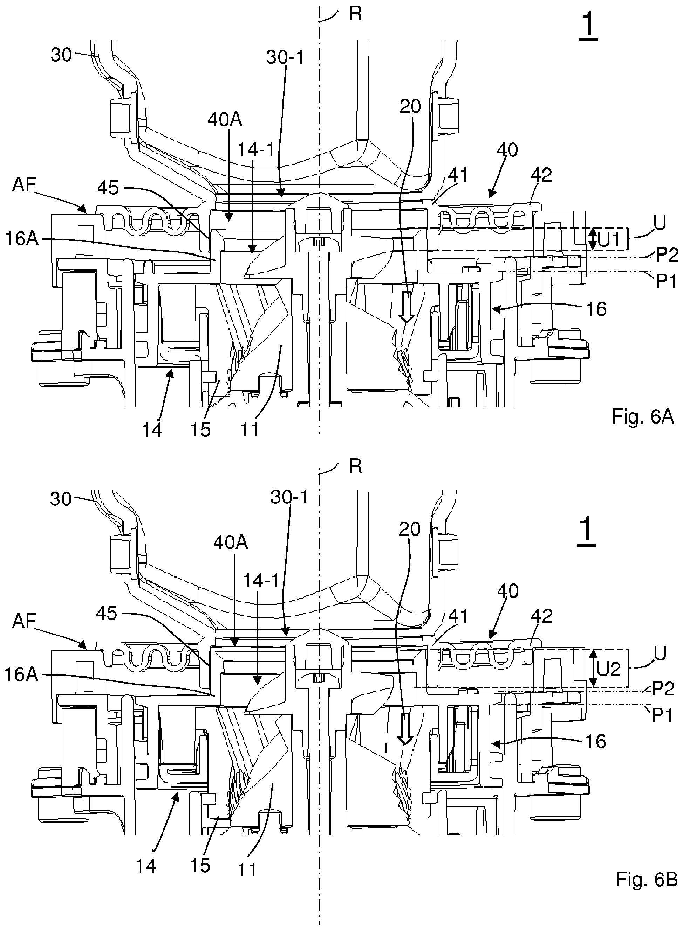

Um im Betrieb des Mahlwerks 1 das Mahlgut (Kaffeebohnen) kontinuierlich in den Mahlspalt 20 fördern zu können, weist das Mahlwerk 1 einen Behälter 30 zur Aufnahme von Mahlgut mit einer Ausgabeöffnung 30-1 für das Mahlgut auf. Im Betrieb des Mahlwerks ist der Behälter 30 gewöhnlich an einer vorgegebenen Position ortsfest bezüglich des Gehäuses 6 der Mahlvorrichtung 5 angeordnet, sodass die Ausgabeöffnung 30-1 über dem Eintrittskanal 14-1 des zweiten Mahlwerkzeugs 14 platziert ist (Fig. 4, 6A, 6B).

Wie Fig. 1-4, 5A, 5B, 6A und 6B andeuten, umfasst die Dichtmanschette 40 einen sich entlang der Drehachse R erstreckenden Durchgangskanal 40A und ist zwischen dem Behälter 30 und dem zweiten Mahlwerkzeug 14 derart angeordnet, dass Mahlgut aus dem Behälter 30 durch die Ausgabeöffnung 30-1 des Behälters 30 über den Durchgangskanal 40A der Dichtmanschette 40 in den Eintrittskanal 14-1 des zweiten Mahlwerkzeugs 14 fallen kann.

Die Dichtmanschette 40 ist insbesondere ortsfest bezüglich des Behälters 30 angeordnet und weist einen ersten ringförmigen Abschnitt 41 auf, welcher den Durchgangskanal 40A radial nach aussen begrenzt, wobei der erste ringförmige Abschnitt 41 sich axial zur Drehachse R derart erstreckt, dass ein erster Bereich des ersten ringförmigen Abschnitts 41 mit dem Behälter 30 in Kontakt ist und ein zweiter Bereich des ersten ringförmigen Abschnitts 41 eine Überlappung in Richtung der Drehachse R mit dem Wandabschnitt 16A des zweiten Mahlwerkzeugs 14 aufweist.

In diesem Zusammenhang bedeutet "Überlappung in Richtung der Drehachse" eine Anordnung des ersten ringförmigen Abschnitts 41 der Dichtmanschette 40 und des Wandabschnitts 16A des zweiten Mahlwerkzeugs 14 derart, dass zumindest ein sich axial zur Drehachse R erstreckender Bereich des ersten ringförmigen Abschnitts 41 der Dichtmanschette 40 und ein sich axial zur Drehachse R erstreckender Bereich des Wandabschnitts 16A des zweiten Mahlwerkzeugs 14 relativ zueinander derart angeordnet sind, dass der eine sich axial zur Drehachse erstreckende Bereich des ersten ringförmigen Abschnitts 41 und der eine sich axial zur Drehachse R erstreckende Bereich des Wandabschnitts 16a des zweiten Mahlwerkzeugs 14 entlang einer parallel zur Drehachse R gerichteten Strecke (im Folgenden "Überlappungsbereich" genannt) nebeneinander angeordnet sind. Zur Veranschaulichung eines "Überlappungsbereichs" sei insbesondere auf Fig. 6A und 6B verwiesen: in Fig. 6A und 6B ist der jeweilige Überlappungsbereich des ersten ringförmigen Abschnitts 41 der Dichtmanschette 40 und des Wandabschnitts 16A des zweiten Mahlwerkzeugs 14 durch eine mit dem Bezugszeichen "U" bezeichnete, parallel zur Drehachse 6 gerichtete Strecke repräsentiert (d.h. entlang der Strecke U bzw. im "Überlappungsbereich U" weisen der erste ringförmige Abschnitt 41 der Dichtmanschette 40 und der Wandabschnitt 16A des zweiten Mahlwerkzeugs 14 eine Überlappung in Richtung der Drehachse R auf) .

Im vorliegenden Beispiel ist die Überlappung des ringförmigen Abschnitts 41 der Dichtmanschette 40 und des Wandabschnitts 16A des zweiten Mahlwerkzeugs 14 dadurch ermöglicht, dass sich der ringförmige Abschnitt 41 der Dichtmanschette 40 und der Wandabschnitt 16A des zweiten Mahlwerkzeugs 14 in unterschiedlichen Abständen zur Drehachse R um die Drehachse R erstrecken. Wie aus Fig. 3, 4, 6A und 6B ersichtlich, hat der Wandabschnitt 16A eine äussere Kontur, welche im Vergleich zum Durchgangskanal 40A der Dichtmanschette 40 derart bemessen ist, dass der Wandabschnitt 16A von der vom Behälter 30 abgewandten Seite der Dichtmanschette 40 her mittels einer Bewegung in Richtung der Drehachse R in den Durchgangskanal 40A der Dichtmanschette 40 einführbar ist, sodass ein dem Behälter 30 zugewandter Endabschnitt des Wandabschnitts 16A von unten (bzw. von der dem Behälter 30 abgewandten Seite) in den Durchgangskanal 40A der Dichtmanschette 40 hineinragt.

Hierbei kann die äussere Kontur des Wandabschnitts 16A derart bemessen sein, dass im Überlappungsbereich U zwischen dem ersten ringförmigen Abschnitt 41 der Dichtmanschette 40 und dem Wandabschnitt 16A des zweiten Mahlwerkzeugs 14 ein Spalt 45 ausgebildet ist (wie in Fig. 4, 6A und 6B angedeutet. Die räumlichen Abmessungen dieses Spalts 45 können so gewählt werden, dass beim Mahlen erzeugte Splitter des Mahlguts den Spalt 45 nicht passieren können. Zu diesem Zweck kann der Spalt 45 radial zur Drehachse R beispielsweise eine Breite im Bereich von 0.1 bis 0.2 mm haben.

Alternativ kann der Wandabschnitt 16A des zweiten Mahlwerkzeugs 14 derart geformt sein, dass der Wandabschnitt 16A des zweiten Mahlwerkzeugs 14 bei einer Bewegung des zweiten Mahlwerkzeugs 14 in Richtung der Drehachse R im Durchgangskanal 40A gleitend an dem ersten ringförmigen Abschnitt 41 anliegt.

Weiterhin sei darauf hingewiesen, dass - alternativ zu den in den Figuren dargestellten Ausführungsformen des Mahlwerks 1 - eine Überlappung des ringförmigen Abschnitts 41 der Dichtmanschette 40 und des Wandabschnitts 16A des zweiten Mahlwerkzeugs 14 auch ermöglicht wäre, wenn der ringförmige Abschnitt 41 der Dichtmanschette 40 eine äussere Kontur aufweist, welche derart bemessen ist, dass der ringförmige Abschnitt 41 der Dichtmanschette 40 von der dem Behälter 30 zugewandten Seite des zweiten Mahlwerkzeugs 14 entlang der Drehachse R in den Eintrittskanal 14-1 des zweiten Mahlwerkzeugs 14 eingeführt werden könnte, sodass ein dem Behälter 30 abgewandter Endabschnitt des ringförmigen Abschnitts 41 der Dichtmanschette 40 von oben (bzw. von der dem Behälter 30 zugewandten Seite) in den Eintrittskanal 14-1 des zweiten Mahlwerkzeugs 14 hineinragt (in den Figuren nicht dargestellt) .

Wie aus Fig. 4 ersichtlich, ist am Behälter 30 eine sich ringförmig um die Ausgabeöffnung 30-1 erstreckende Kontaktfläche 30-2 für den ersten ringförmigen Abschnitt 41 der Dichtmanschette 40 ausgebildet. Im vorliegenden Beispiel gemäss Fig. 4 weist die Kontaktfläche 30-2 radial zur Drehachse R eine Breite D auf. Entsprechend ist an der dem Behälter 30 zugewandten Seite des ersten ringförmigen Abschnitts 41 der Dichtmanschette 40 eine sich ringförmig um den Durchgangskanal 40A erstreckende Kontaktfläche 41A für den Behälter 30 ausgebildet. Im vorliegenden Beispiel sind die am Behälter 30 ausgebildete Kontaktfläche 30-2 für den ersten ringförmigen Abschnitt 41 und die am ersten ringförmigen Abschnitt 41 ausgebildete Kontaktfläche 41A für den Behälter 30 jeweils als ebene Fläche ausgebildet. Dies hat den Vorteil, dass die Kontaktfläche 30-2 und die Kontaktfläche 41A auf einfache Weise realisierbar sind und der Behälter 30 und die Dichtmanschette 40 auf einfache Weise derart relativ zueinander angeordnet werden können, dass die Kontaktfläche 41A für den Behälter 30 dicht an der Kontaktfläche 30-2 für den ersten ringförmigen Abschnitt 41, und zwar unabhängig davon, in welche Position das zweite Mahlwerkzeug 14 relativ zum Behälter 30 gebracht ist.

In den in Fig. 3, 6A und 6B dargestellten Situationen ist die Dichtmanschette 40 jeweils ortsfest bezüglich des Behälters 30 derart angeordnet, dass die Kontaktfläche 41A und die Kontaktfläche 30-2 entlang einer sich ringförmig um die Drehachse R erstreckenden Linie dicht aufeinander liegen, sodass zwischen der Kontaktfläche 41A und der Kontaktfläche 30-2 kein Zwischenraum vorhanden ist, welchen beim Mahlen erzeugte Splitter des Mahlguts passieren könnten.

Die in Fig. 6A und 6B dargestellten Situationen unterscheiden sich dadurch, dass das zweite Mahlwerkzeug 14 durch Drehen des Einstellrads in unterschiedliche axiale Positionen relativ zum Behälter gebracht ist. Im Falle der Fig. 6A ist das zweite Mahlwerkzeug 14 mit Bezug auf die Drehachse R in eine erste (untere) Position P1 gebracht. Hierbei weist der Überlappungsbereich U des ersten ringförmigen Abschnitts 41 der Dichtmanschette 40 und des Wandabschnitts 16A des zweiten Mahlwerkzeugs 14 in Richtung der Drehachse R eine Erstreckung auf, welche in Fig. 6A mit dem Bezugszeichen U1 bezeichnet ist. Im Falle der Fig. 6B ist das zweite Mahlwerkzeug 14 mit Bezug auf die Drehachse R in eine zweite (obere) Position P2 gebracht. Hierbei weist der Überlappungsbereich U des ersten ringförmigen Abschnitts 41 der Dichtmanschette 40 und des Wandabschnitts 16A des zweiten Mahlwerkzeugs 14 in Richtung der Drehachse R eine Erstreckung auf, welche in Fig. 6B mit dem Bezugszeichen U2 bezeichnet ist. Wie ersichtlich hat der Überlappungsbereich U im Falle der Fig. 6B eine grössere Erstreckung in Richtung der Drehachse als im Falle der Fig. 6A (d.h. U2 > U1). Dementsprechend weist der Überlappungsbereich U eine Erstreckung in Richtung der Drehachse R auf, welche bei einer Bewegung des zweiten Mahlwerkzeugs 14 in Richtung der Drehachse R veränderbar ist.

Um die Dichtmanschette 40 ortsfest bezüglich des Behälters 30 zu halten, weist das Mahlwerk 1 mindestens eine bezüglich des Behälters 30 ortsfeste Auflagefläche auf, auf welche die Dichtmanschette 40 gestützt werden kann. Im Falle der in den Figuren dargestellten Ausführungsformen weist der Verstellring 22 an seiner Oberseite eine sich ringförmig um die Drehachse R erstreckende Oberfläche auf, welche (wie erwähnt) ihre Position axial zur Drehachse R selbst dann nicht ändert, wenn der Verstellring 22 um die Drehachse R gedreht wird. Die Oberseite des Verstellrings 22 bildet dementsprechend eine bezüglich des Behälters 30 ortsfeste Auflagefläche AF (Fig. 3, 4, 6A, 6B). Im Falle der in den Figuren dargestellten Ausführungsformen ist deshalb die Dichtmanschette 40 dadurch ortsfest bezüglich des Behälters 30 gehalten, dass sie an ihrer Peripherie auf die an der Oberseite des Verstellrings 22 ausgebildete Auflagefläche AF gestützt ist.

Alternativ wäre es selbstverständlich denkbar, andere bezüglich des Behälters 30 ortsfeste Flächen als Auflagefläche für eine Dichtmanschette 40 zu wählen, beispielsweise eine am Gehäuse 6 entsprechend ortsfest ausgebildete Auflagefläche. In einer in den Figuren dargestellten Ausführungsform weist die Dichtmanschette 40 einen zweiten ringförmigen Abschnitt 42 auf, welcher sich ringförmig um die Drehachse R erstreckt und mit dem ersten ringförmigen Abschnitt 41 verbunden ist. Um die Dichtmanschette 40 ortsfest bezüglich des Behälters 30 zu halten, ist der zweite ringförmige Abschnitt 42 der Dichtmanschette 40 auf die an der Oberseite des Verstellrings 22 ausgebildete Auflagefläche AF gestützt (Fig. 3, 4, 6A, 6B).

Der erste ringförmige Abschnitt 41 und der zweite ringförmige Abschnitt 42 der Dichtmanschette 40 erstrecken sich derart ringförmig um die Drehachse R, dass der erste ringförmige Abschnitt 41 und der zweite ringförmige Abschnitt 42 jeweils einen Abstand zur Drehachse R aufweisen. In den vorliegenden Beispielen erstreckt sich der zweite ringförmige Abschnitt 42 in einem grösseren Abstand zur Drehachse R als der erste ringförmige Abschnitt 41. Diese Konstruktion der Dichtmanschette 40 ermöglicht es, die Dichtmanschette 40 mittels des zweiten ringförmigen Abschnitts 42 auf eine Auflagefläche AF zu stützen, welche einen relativ grossen Abstand zur Drehachse R aufweist.

Wie insbesondere aus Fig. 1, 3, 5A und 5B ersichtlich, kann die Dichtmanschette 40 derart ausgebildet sein, dass sie mindestens einen Verbindungsabschnitt 43 umfasst, welcher sich zwischen dem ersten ringförmigen Abschnitt 41 und dem zweiten ringförmigen Abschnitt 42 erstreckt und sowohl mit dem ersten ringförmigen Abschnitt 41 als auch mit dem zweiten ringförmigen Abschnitt 42 verbunden ist. Die Dichtmanschette 40 kann auch eine Mehrzahl eines derartigen Verbindungsabschnitts 43 aufweisen, beispielsweise zwei, drei, vier, fünf, sechs oder mehr Verbindungsabschnitte 43.

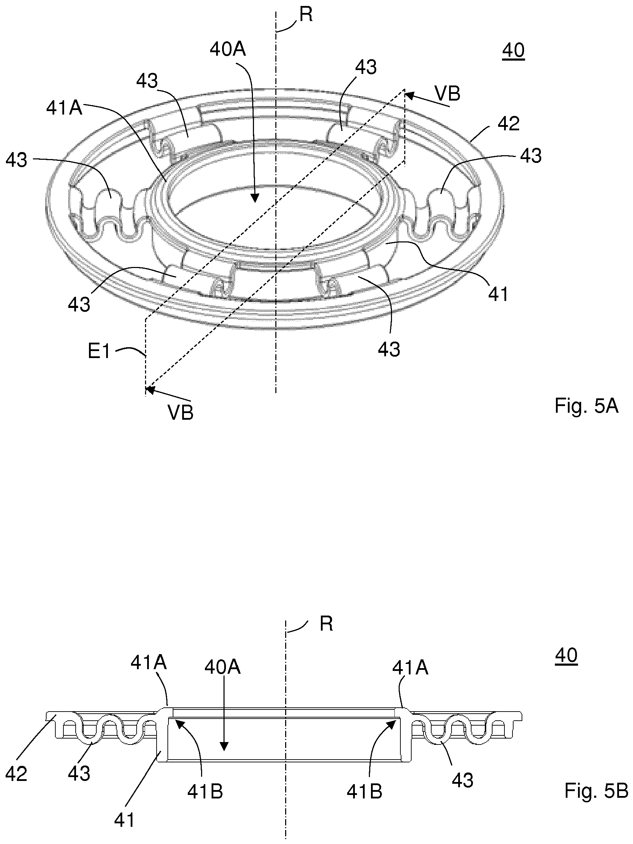

Fig. 1, 5A und 5B zeigen beispielsweise eine Ausführungsform der Dichtmanschette 40 mit sechs Verbindungsabschnitten 43. Die Verbindungsabschnitte 43 können sich beispielsweise zwischen dem ersten ringförmigen Abschnitt 41 und dem zweiten ringförmigen Abschnitt 42 jeweils radial zur Drehachse R erstrecken.

Der erste ringförmige Abschnitt 41, der zweite ringförmige Abschnitt 42 und die Verbindungsabschnitten 43 können hinsichtlich ihrer Form, ihrer Grösse und ihrer mechanischen Eigenschaften unterschiedlich gestaltet sein, um die Dichtwirkung der Dichtmanschette 40 zu optimieren. Der erste ringförmige Abschnitt 41 und der zweite ringförmige Abschnitt 42 können beispielsweise aus einem relativ harten Material (beispielsweise Kunststoff oder Metall) gefertigt sein, sodass sie eine hohe Steifigkeit aufweisen. In diesem Fall kann beispielsweise der erste ringförmige Abschnitt 41 mit einer hohen Anpresskraft gegen die am Behälter 30 ausgebildete Kontaktfläche 30-2 für den ersten ringförmigen Abschnitt 41 gedrückt werden und dabei gewährleistet werden, dass sich der erste ringförmige Abschnitt 41 der Dichtmanschette 40 nicht verbiegt. Weiterhin kann hierdurch verhindert werden, dass beim Mahlen erzeugte Splitter des Mahlguts beim Aufprall auf die Dichtmanschette 40 den ersten ringförmigen Abschnitt 41 deformieren können.

Der mindestens eine Verbindungsabschnitt 43 bzw. die jeweiligen Verbindungsabschnitte 43 können beispielsweise als Federelement ausgebildet sein und dementsprechend elastisch deformierbar sein. Im Fall der in Fig. 1, 5A und 5B dargestellten Ausführungsform der Dichtmanschette 40 wird eine grosse elastische Deformierbarkeit der Verbindungsabschnitte 43 dadurch erreicht, dass die jeweiligen Verbindungsabschnitte 43 radial zur Drehachse R ein wellenförmiges Profil aufweisen und axial zur Drehachse R im Vergleich zum ersten ringförmigen Abschnitt 41 und zum zweiten ringförmigen Abschnitt 42 der Dichtmanschette 40 eine geringe Dicke aufweisen.

Auf diese Weise ist der mindestens eine Verbindungsabschnitt 43 bzw. sind die jeweiligen Verbindungsabschnitte 43 derart elastisch deformierbar, dass der erste ringförmige Abschnitt 41 relativ zum zweiten ringförmigen Abschnitt 42 bewegbar ist, insbesondere in Richtung der Drehachse R. In diesem Fall sind die jeweiligen Verbindungsabschnitte 43 gewöhnlich ausgebildet, den ersten ringförmigen Abschnitt 41 in einer Ruhelage relativ zum zweiten ringförmigen Abschnitt 42 zu halten. Wird der erste ringförmige Abschnitt 41 von dieser Ruhelage weg bewegt, werden die jeweiligen Verbindungsabschnitte 43 der Dichtmanschette 40 elastisch deformiert und erzeugen dabei eine der Bewegung entgegenwirkende Rückstellkraft. Dementsprechend kann der erste ringförmige Abschnitt 41 relativ zum zweiten ringförmigen Abschnitt 42 der Dichtmanschette 40 derart angeordnet sein, dass der mindestens eine Verbindungsabschnitt 43 elastisch vorgespannt ist und eine Anpresskraft erzeugt, welche ausgebildet ist, die am ersten ringförmigen Abschnitt 41 ausgebildete Kontaktfläche 41A für den Behälter 30 an die am Behälter 30 ausgebildete Kontaktfläche 30-2 für den ersten ringförmigen Abschnitt 41 zu pressen. Die Erzeugung dieser Anpresskraft führt zu einer verbesserten Dichtwirkung der Dichtmanschette 40. Durch eine geeignete Gestaltung der jeweiligen Verbindungsabschnitte 43 kann somit erreicht werden, dass die Kontaktfläche 41A für den Behälter 30 an die am Behälter 30 ausgebildete Kontaktfläche 30-2 mit einer vorgegebenen Anpresskraft gedrückt wird.

Um die Dichtwirkung der Dichtmanschette 40 zusätzlich zu verbessern, ist der erste ringförmige Abschnitt 41 der Dichtmanschette 40 in der Nähe der Kontaktfläche 41A mit einem sich radial nach innen erstreckenden Flanschabschnitt 41B versehen (Fig. 5B). Dieser Flanschabschnitt 41B hat den Effekt, dass beim Mahlen erzeugte Splitter des Mahlguts aus dem Mahlspalt 20 heraus nach oben geschleudert und von unten gegen den Flanschabschnitt 41B prallen können. Dies erhöht die Anpresskraft, mit welcher die am ersten ringförmigen Abschnitt 41 ausgebildete Kontaktfläche 41A für den Behälter 30 an die am Behälter 30 ausgebildete Kontaktfläche 30-2 für den ersten ringförmigen Abschnitt 41 gedrückt wird, und verbessert somit die Dichtwirkung der Dichtmanschette 40.

Die vorstehend beschriebene Anpressung der Kontaktfläche 41A für den Behälter 30 an die am Behälter 30 ausgebildete Kontaktfläche 30-2 hat weiterhin den Effekt, dass während des Mahlens in der Mahlvorrichtung 5 erzeugte mechanische Schwingungen über den ersten ringförmigen Abschnitt 41 der Dichtmanschette 40 verstärkt auf den Behälter 30 übertragen werden können. Dies beeinflusst die räumliche Verteilung von Mahlgut im Behälter 30 und hat vorteilhafterweise den Effekt, dass ein gleichmässiger Transport von Mahlgut aus dem Behälter 30 in den Mahlspalt 20 gefördert wird.

Weiterhin sei darauf hingewiesen, dass das erste Mahlwerkzeug 11 und das zweite Mahlwerkzeug 14 durch scheibenförmige Mahlwerkzeuge eines Scheibenmahlwerks (wie in EP 2 984 973 A1 offenbart) ersetzbar sind.

## Patentansprüche

1. Mahlwerk (1) zum Mahlen von Mahlgut, insbesondere zum Mahlen von Kaffeebohnen, welches umfasst:
einen Behälter (30) zur Aufnahme von Mahlgut mit einer Ausgabeöffnung (30-1) für das Mahlgut;
ein erstes Mahlwerkzeug (11) und ein zweites Mahlwerkzeug (14), wobei das erste Mahlwerkzeug (11) relativ zu dem zweiten Mahlwerkzeug (14) um eine Drehachse (R) derart drehbar ist, dass Mahlgut in einem zwischen dem ersten Mahlwerkzeug (11) und dem zweiten Mahlwerkzeug (14) ausgebildeten Mahlspalt (20) zu einem Pulver zerkleinerbar ist, wobei das zweite Mahlwerkzeug (14) einen Eintrittskanal (14-1) aufweist, durch welchen aus der Ausgabeöffnung (30-1) des Behälters (30) ausgegebenes Mahlgut in den Mahlspalt (20) zuführbar ist, und wobei das zweite Mahlwerkzeug (14) derart gelagert ist, dass es axial zur Drehachse (R) bewegbar und in verschiedene Positionen (P1, P2) relativ zum ersten Mahlwerkzeug (11) und zum Behälter (30) bringbar ist;
eine Dichtmanschette (40) mit einem sich entlang der Drehachse (R) erstreckenden Durchgangskanal (40A), welche Dichtmanschette (40) zwischen dem Behälter (30) und dem zweiten Mahlwerkzeug (14) angeordnet ist, sodass Mahlgut aus dem Behälter (30) durch die Ausgabeöffnung (30-1) des Behälters (30) über den Durchgangskanal (40A) der Dichtmanschette (40) in den Eintrittskanal (14-1) des zweiten Mahlwerkzeugs (14) fallen kann,
wobei das zweite Mahlwerkzeug (14) einen sich ringförmig um die Drehachse (R) erstreckenden Wandabschnitt (16A) umfasst, welcher den Eintrittskanal (14-1) radial nach aussen begrenzt,
**dadurch gekennzeichnet, dass**
die Dichtmanschette (40) ortsfest bezüglich des Behälters (30) angeordnet ist und einen ersten ringförmigen Abschnitt (41) aufweist, welcher den Durchgangskanal (40A) radial nach aussen begrenzt, wobei der erste ringförmige Abschnitt (41) sich axial zur Drehachse (R) derart erstreckt, dass ein erster Bereich des ersten ringförmigen Abschnitts (41) mit dem Behälter (30) in Kontakt ist und ein zweiter Bereich des ersten ringförmigen Abschnitts (41) eine Überlappung (U) in Richtung der Drehachse (R) mit dem Wandabschnitt (16A) des zweiten Mahlwerkzeugs (14) aufweist.

2. Mahlwerk (1) nach Anspruch 1, welches
eine bezüglich des Behälters (30) ortsfeste Auflagefläche (AF) aufweist, auf welche die Dichtmanschette (40) gestützt ist, um die Dichtmanschette (40) ortsfest bezüglich des Behälters (30) zu halten.

3. Mahlwerk (1) nach Anspruch 1, wobei
die Dichtmanschette (40) einen zweiten ringförmigen Abschnitt (42) aufweist, welcher sich ringförmig um die Drehachse (R) erstreckt und mit dem ersten ringförmigen Abschnitt (41) verbunden ist.

4. Mahlwerk (1) nach Anspruch 3, welches
eine bezüglich des Behälters (30) ortsfeste Auflagefläche (AF) aufweist, auf welche der zweite ringförmige Abschnitt (42) der Dichtmanschette (40) gestützt ist, um die Dichtmanschette (40) ortsfest bezüglich des Behälters (30) zu halten.

5. Mahlwerk (1) nach einem der Ansprüche 3-4, wobei
der erste ringförmige Abschnitt (41) und der zweite ringförmige Abschnitt (42) sich derart ringförmig um die Drehachse (R) erstrecken, dass der erste ringförmige Abschnitt (41) und der zweite ringförmige Abschnitt (42) jeweils einen Abstand zur Drehachse (R) aufweisen.

6. Mahlwerk (1) nach Anspruch 5, wobei
der zweite ringförmige Abschnitt (42) sich in einem grösseren Abstand zur Drehachse (R) erstreckt als der erste ringförmige Abschnitt (41).

7. Mahlwerk (1) nach einem der Ansprüche 3-6, wobei
sich der zweite ringförmige Abschnitt (42) auf der von der Drehachse (R) abgewandten Seite des ersten ringförmigen Abschnitts (41) entlang der Peripherie des ersten ringförmigen Abschnitts (41) erstreckt.

8. Mahlwerk (1) nach einem der Ansprüche 3-7, wobei
die Dichtmanschette (40) mindestens einen Verbindungsabschnitt (43) umfasst, welcher sich zwischen dem ersten ringförmigen Abschnitt (41) und dem zweiten ringförmigen Abschnitt (42) erstreckt und sowohl mit dem ersten ringförmigen Abschnitt (41) als auch mit dem zweiten ringförmigen Abschnitt (42) verbunden ist.

9. Mahlwerk (1) nach Anspruch 8, wobei
die Dichtmanschette (40) eine Mehrzahl des Verbindungsabschnitts (43) aufweist.

10. Mahlwerk (1) nach einem der Ansprüche 8-9, wobei
sich der mindestens eine Verbindungsabschnitt (43) radial zur Drehachse (R) erstreckt.

11. Mahlwerk (1) nach einem der Ansprüche 8-10, wobei
der mindestens eine Verbindungsabschnitt (43) als Federelement ausgebildet ist.

12. Mahlwerk (1) nach Anspruch 11, wobei
der mindestens eine Verbindungsabschnitt (43) derart elastisch deformierbar ist, dass der erste ringförmige Abschnitt (41) relativ zum zweiten ringförmigen Abschnitt (42) in Richtung der Drehachse (R) bewegbar ist.

13. Mahlwerk (1) nach Anspruch 11 oder 12, wobei
am Behälter (30) eine sich ringförmig um die Ausgabeöffnung (30-1) erstreckende Kontaktfläche (30-2) für den ersten ringförmigen Abschnitt (41) der Dichtmanschette (40) ausgebildet ist,
am ersten ringförmigen Abschnitt (41) der Dichtmanschette (40) eine sich ringförmig um den Durchgangskanal (40A) erstreckende Kontaktfläche (41A) für den Behälter (30) ausgebildet ist, und
der erste ringförmige Abschnitt (41) relativ zum zweiten ringförmigen Abschnitt (42) derart angeordnet ist, dass der mindestens eine Verbindungsabschnitt (43) elastisch vorgespannt ist und eine Anpresskraft erzeugt, welche ausgebildet ist, die am ersten ringförmigen Abschnitt (41) ausgebildete Kontaktfläche (41A) für den Behälter (30) an die am Behälter (30) ausgebildete Kontaktfläche (30-2) für den ersten ringförmigen Abschnitt (41) zu pressen.

14. Mahlwerk (1) nach Anspruch 13, wobei
die am Behälter (30) ausgebildete Kontaktfläche (30-2) für den ersten ringförmigen Abschnitt (41) eine ebene Fläche ist, und/oder
am ersten ringförmigen Abschnitt (41) ausgebildete Kontaktfläche (41A) für den Behälter (30) eine ebene Fläche ist.

15. Mahlwerk (1) nach einem der Ansprüche 1-14, wobei
zwischen dem ersten ringförmigen Abschnitt (41) der Dichtmanschette (40) und dem Wandabschnitt (16A) des zweiten Mahlwerkzeugs (14) ein Spalt (45) ausgebildet ist oder
der Wandabschnitt (16A) des zweiten Mahlwerkzeugs (14) bei einer Bewegung des zweiten Mahlwerkzeugs (14) in Richtung der Drehachse (R) gleitend an dem ersten ringförmigen Abschnitt (41) anliegt.

16. Mahlwerk (1) nach einem der Ansprüche 1-15, wobei
die Überlappung (U) eine Erstreckung (U1, U2) in Richtung der Drehachse (R) aufweist, welche bei einer Bewegung des zweiten Mahlwerkzeugs (14) in Richtung der Drehachse (R) veränderbar ist.
